# EUROPEAN PATENT APPLICATION

(11) **EP 4 386 477 A1**
(43) Date of publication of application: **19.06.2024**
(21) Application number: 22874807.5
(22) Date of filing: 24.09.2022
(51) Int. Cl.: G03B 17/17, H04N 23/00

(54) **CAMERA MODULE AND ELECTRONIC DEVICE**

(30) Priority: 29.09.2021 CN 202111149178
(71) Applicant: Huawei Technologies Co., Ltd., Shenzhen, Guangdong 518129 (CN)
(72) Inventor: JI, Ang, Shenzhen, Guangdong 518129 (CN); HE, Yingyong, Shenzhen, Guangdong 518129 (CN); LI, Dengfeng, Shenzhen, Guangdong 518129 (CN); WANG, Jianwen, Shenzhen, Guangdong 518129 (CN); TANG, Wei, Shenzhen, Guangdong 518129 (CN); FAN, Yafei, Shenzhen, Guangdong 518129 (CN); LIN, Weichih, Shenzhen, Guangdong 518129 (CN)
(74) Representative: Thun, Clemens
(86) International application number: PCT/CN2022/121135
(87) International publication number: WO 2023/051421

(57) **Abstract**

This application provides a camera module and an electronic device. The camera module (100a) includes a planoconvex lens (13a), a first reflector (12a), a focusing lens (2a), a prime lens (3a), a second reflector (41a), a chip module (43a), and a stabilization motor (42a) that are sequentially arranged from an object side to an image side. The first reflector (12a) is configured to direct an optical axis from a first direction to a second direction. The second reflector (41a) is configured to direct the optical axis from the second direction to a third direction. In this way, the photosensitive surface (4321a) of the chip module (43a) may not be limited by a size of the camera module (100a) in a direction that is perpendicular to the second direction, and a large photosensitive surface design of the photosensitive surface of the chip module can be implemented. The stabilization motor (42a) includes a base (421a), a movable circuit board (422a), and a driving mechanism (424a). The driving mechanism (424a) of the stabilization motor (42a) includes a magnet (4241a) and a coil (4242a). The coil (4242a) is configured to: when being energized, cooperate with the magnet (4241a) to drive the movable circuit board (422a) to move on a plane that is perpendicular to the third direction or tilts relative to the third direction. The structure of the driving mechanism (424a) of the stabilization motor (42a) is simple.

## Description

This application claims priority to Chinese Patent Application No. 202111149178.9, filed with the China National Intellectual Property Administration on September 29, 2021 and entitled "CAMERA MODULE AND ELECTRONIC DEVICE", which is incorporated herein by reference in its entirety.

### TECHNICAL FIELD

This application relates to the field of image shooting technologies, and in particular, to a camera module and an electronic device.

### BACKGROUND

In recent years, major manufacturers have put forward stricter requirements on image obtaining quality of camera modules. In a conventional camera module, a reflector is disposed on an object side of a lens, to reflect light from a first direction to a second direction. In addition, a photosensitive chip is disposed perpendicular to the second direction, to receive light from the second direction. In this way, an amplification rate of the conventional camera module may be increased to a large extent, so that the camera module has good image obtaining quality. However, because a size of the camera module in a direction that is perpendicular to the second direction is limited, the photosensitive chip cannot be configured with a large photosensitive surface.

### SUMMARY

This application provides a camera module in which a photosensitive chip may be configured with a large photosensitive surface and may simultaneously implement wide aperture, telephoto, and macro photography, and an electronic device.

According to a first aspect, an embodiment of this application provides a camera module. The camera module includes a planoconvex lens, a first reflector, a focusing lens, a prime lens, a second reflector, and a chip module that are sequentially arranged from an object side to an image side. The first reflector is configured to direct an optical axis from a first direction to a second direction. The second reflector is configured to direct the optical axis from the second direction to a third direction. Both the third direction and the first direction intersect the second direction.

The camera module includes a stabilization motor. The stabilization motor includes a base, a movable circuit board, and a driving mechanism. The movable circuit board is movably connected to the base. The chip module is fastened to the movable circuit board. The driving mechanism includes a magnet and a coil. One of the magnet and the coil is fastened to the base, and the other of the magnet and the coil is fastened to the movable circuit board. The coil is configured to: when being energized, cooperate with the magnet to drive the movable circuit board to move on a plane that is perpendicular to the third direction or tilts relative to the third direction.

It may be understood that the first reflector and the second reflector are disposed in the camera module, the first reflector is configured to direct the optical axis from the first direction to the second direction, and the second reflector is configured to direct the optical axis from the second direction to the third direction, so that the photosensitive surface of the chip module may be disposed on the plane that is perpendicular to the third direction. In this way, the photosensitive surface of the chip module may not be limited by a size of the camera module in a direction that is perpendicular to the second direction, and a large photosensitive surface design of the photosensitive surface of the chip module can be implemented. In particular, when the camera module is used in an electronic device, the third direction and a thickness direction of the electronic device may be disposed at an included angle, and the photosensitive surface of the chip module may not be vertically disposed. In other words, a size of the photosensitive surface of the chip module may not be limited by a size of the electronic device in the thickness direction, and a large photosensitive surface design of the photosensitive surface of the chip module can be implemented.

In addition, a difference between a solution in which a connecting part is disposed between the base and a movable plate and the movable circuit board is driven to move by using the connecting part and this implementation lies in that the driving mechanism of the stabilization motor in this implementation uses a magnet and coil structure so that the coil cooperates with the magnet to drive the movable circuit board to move on the plane that is perpendicular to the third direction or tilts relative to the third direction when the coil is energized. In this case, a driving force applied to the movable circuit board may be transferred not by using a connecting part that is connected between the base and the movable plate. In this way, a structure of the driving mechanism of the stabilization motor is simple, and process implementation is easier.

In addition, the focusing lens and the prime lens cooperate with each other, so that when the focusing lens moves toward the object side, a combined focal length of the focusing lens and the prime lens may present a decreasing trend. In this way, the focusing lens only needs to move for a small displacement (that is, a small focusing stroke) to implement a focusing process of the camera module. In addition, when image obtaining quality is reduced because the focusing lens needs to move for a long distance when photographing a near scene, the prime lens may compensate for an optical system. This function can effectively reduce aberration caused by focusing, so that the camera module has a higher focusing capability, and may not only perform long-range photography, but also photograph a near scene (for example, a macro scene), and has higher image obtaining quality and high definition of an obtained image.

In addition, the light starts to shrink when passing through the planoconvex lens. When the light reaches the focusing lens after being reflected by the first reflector, the light has shrunk over a long optical path, and a diameter of the light is small. The focusing lens and the prime lens are no longer maximum limits on a light transmission aperture of the camera module. Therefore, the planoconvex lens and the first reflector are disposed, so that the light transmission aperture of the camera module can be effectively increased, and a wide aperture can be implemented, that is, the camera module has a small aperture value. In addition, the planoconvex lens is disposed on the object side of the first reflector, so that a path length of the optical system can be increased. This implements telephoto photography effect. In this embodiment, an aperture value of the camera module may be less than 2.2, and an amplification rate may be greater than 2.5X.

In a possible implementation, the coil is fastened to the movable circuit board, and the magnet is fastened to the base. In this way, it is easy for the coil to be electrically connected to the movable circuit board, that is, an electrical connection manner is simple.

In a possible implementation, movable space is enclosed by a bottom of the base. The second mounting space is further enclosed by the base. The second mounting space communicates with the movable space. The movable circuit board is located in the movable space. The movable circuit board is provided with a through hole. The second reflector is fastened in the second mounting space. The chip module is fastened to a surface that is of the movable circuit board and that is away from the second reflector. The through hole is located between the chip module and a second light-exiting surface of the second reflector.

It may be understood that the movable space and the second mounting space are disposed on the base, the movable circuit board is disposed in the movable space, the second reflector is fastened in the second mounting space, and the chip module is fastened to the surface that is of the movable circuit board and that is away from the second reflector, so that the base, the second reflector, the movable circuit board, and the chip module may be compactly disposed. This improves space utilization. In addition, integrity of the base, the second reflector, the movable circuit board, and the chip module is good.

In addition, the chip module is fastened to the surface that is of the movable circuit board and that is away from the second reflector, so that in an assembling process of the chip module and the stabilization motor, the chip module is not likely to interfere with the base and the driving mechanism of the stabilization motor. This reduces difficulty of assembling the chip module.

In a possible implementation, the chip module includes a photosensitive chip and a chip circuit board. The photosensitive chip includes a photosensitive surface and a first pin end. The photosensitive surface and the first pin end face a same side. The chip circuit board includes a second pin end. A size of the second pin end is greater than a size of the first pin end. The photosensitive chip is fastened to the chip circuit board. The chip circuit board is fastened to the movable circuit board. The first pin end is electrically connected to the movable circuit board by using the second pin end. The through hole is located between the photosensitive surface of the photosensitive chip and a second light-exiting surface of the second reflector.

It may be understood that, because both the photosensitive surface and the first pin end of the photosensitive chip face the same side, and the size of the first pin end is small, it is not easy for the first pin end of the photosensitive chip to be directly fastened to the movable circuit board and electrically connected to the movable circuit board. However, in this implementation, one chip circuit board is additionally disposed, and the size of the second pin end of the chip circuit board is greater than the size of the first pin end of the photosensitive chip, so that the first pin end of the photosensitive chip is electrically connected to the movable circuit board by using the second pin end of the chip circuit board. Because it is easy for the second pin end of the chip circuit board to be welded to the movable circuit board, a location limit of the first pin end no longer prevents the photosensitive chip from being fastened and electrically connected to the movable circuit board.

In addition, the chip circuit board and the photosensitive chip are disposed as one separate module, that is, the chip circuit board and the photosensitive chip are of one independent integral structure. Therefore, in an assembling process of the camera module, the chip circuit board and the photosensitive chip may be first assembled into the chip module, and then the chip module is assembled on the stabilization motor. Compared with a process of assembling the chip circuit board, the photosensitive chip, and the stabilization motor into a whole, this assembling process is simple and has a low difficulty coefficient. In addition, in an assembling process of the stabilization motor, the chip module may be prevented from being scrapped together with an unqualified stabilization motor. This significantly reduces defect loss costs. It may be understood that, because a structure of the stabilization motor is complex, and a large quantity of manufacturing processes are required in an assembling process, the stabilization motor is likely to be defective. If the chip module and the stabilization motor are assembled together, when the stabilization motor is defective, the chip module and the stabilization motor are scrapped together. This significantly increases defect loss costs. However, in this implementation, because the chip module and the stabilization motor may be separately assembled, when the stabilization motor is defective, the chip module and the stabilization motor are not scrapped together. This significantly reduces defect loss costs.

In a possible implementation, the photosensitive chip is fastened to a middle part of the chip circuit board. The second pin end is located at a peripheral edge of the chip circuit board. In this way, a process of welding the chip circuit board to the movable circuit board is not likely to be interfered by the photosensitive chip, and it is easy for the second pin end of the chip circuit board to be welded to the movable circuit board.

In a possible implementation, a size of the second pin end is in a range from 0.3 millimeter to 0.5 millimeter. In this way, it is easier for the second pin end of the chip circuit board to be welded to the movable circuit board.

In a possible implementation, the first pin end is electrically connected to the second pin end by using a chip on board (chip on board, COB) process.

In a possible implementation, the chip module further includes a light filter holder and a light filter. The light filter holder is fastened to the chip circuit board. The light filter holder and the photosensitive chip are located on a same side of the chip circuit board. The light filter holder is provided with a light transmission hole. The light filter is fastened to the light filter holder. The light filter is located in the light transmission hole, and is located between the photosensitive chip and the second reflector.

It may be understood that the chip circuit board, the photosensitive chip, the light filter holder, and the light filter are disposed as one separate module, that is, the chip circuit board, the photosensitive chip, the light filter holder, and the light filter are of one independent integral structure. Therefore, in an assembling process of the camera module, the chip circuit board, the photosensitive chip, the light filter holder, and the light filter may be first assembled into the chip module, and then the chip module is assembled on the stabilization motor. Compared with a process of assembling the chip circuit board, the photosensitive chip, the light filter holder, the light filter, and the stabilization motor into a whole, this assembling process is simple and has a low difficulty coefficient. In addition, in an assembling process of the stabilization motor, the chip module may be prevented from being scrapped together with an unqualified stabilization motor. This significantly reduces defect loss costs. It may be understood that, because a structure of the stabilization motor is complex, and a large quantity of manufacturing processes are required in an assembling process, the stabilization motor is likely to be defective. If the chip module and the stabilization motor are assembled together, when the stabilization motor is defective, the chip module and the stabilization motor are scrapped together. This significantly increases defect loss costs. However, in this implementation, because the chip module and the stabilization motor may be separately assembled, when the stabilization motor is defective, the chip module and the stabilization motor are not scrapped together. This significantly reduces defect loss costs.

In a possible implementation, the chip circuit board is provided with a sunken recess. The photosensitive chip is located in the sunken recess. It may be understood that, in this case, in a thickness direction of the chip circuit board, the photosensitive chip and the chip circuit board have an overlapping area, so that an increase in a thickness of the camera module caused by stacking of the photosensitive chip on the chip circuit board is avoided.

In a possible implementation, the chip circuit board includes a chip circuit board body and a stiffening plate that are disposed in a stacked manner. The chip circuit board body is fastened to the movable circuit board. The sunken recess is located on the chip circuit board body. The sunken recess forms an opening on a top surface and a bottom surface of the chip circuit board body. The photosensitive chip is fastened to the stiffening plate and electrically connected to the chip circuit board body.

It may be understood that the stiffening plate may improve strength of the chip circuit board body. In addition, because the stiffening plate has good thermal conductivity, the stiffening plate may quickly conduct heat generated by the photosensitive chip.

In a possible implementation, the chip module is the photosensitive chip. The photosensitive chip is electrically connected to the movable circuit board. In this way, a structure of the camera module is simple, and no extra chip circuit board is required.

In a possible implementation, the prime lens is fastened in the second mounting space. It may be understood that the prime lens is fastened in the second mounting space, so that the base, the prime lens, the second reflector, the movable circuit board and the chip module may be compactly disposed. This improves space utilization. In addition, integrity of the base, the prime lens, the second reflector, the movable circuit board, and the chip module is good.

In a possible implementation, the third direction is parallel to the first direction, and both the third direction and the first direction are perpendicular to the second direction.

In a possible implementation, the planoconvex lens is fastened to the first reflector, or the planoconvex lens and the first reflector are of an integral structure.

In a possible implementation, the camera module further includes a reflector holder. The reflector holder includes a first surface, a second surface, and a third surface. The third surface is connected between the first surface and the second surface. The second surface is fastened to the focusing lens. The reflector holder includes first mounting space. Openings of the first mounting space are located on the first surface and the second surface. The first reflector is fastened in the first mounting space. A first light-entering surface of the first reflector and the first surface of the reflector holder face a same side. A first light-exiting surface of the first reflector and the second surface of the reflector holder face a same side.

In a possible implementation, the reflector holder includes a convex hull. The convex hull is disposed to protrude from the first surface. The convex hull is located around the first mounting space and is disposed around the first mounting space. A distance between a convex surface of the planoconvex lens and the first surface is less than a distance between a top surface of the convex hull and the first surface. In this way, the planoconvex lens is located in an area enclosed by the convex hull. The planoconvex lens is not likely to collide with another component.

In a possible implementation, the camera module further includes an assembly circuit board. The assembly circuit board is fastened to the base. The first pin end is electrically connected to the assembly circuit board by using the second pin end, the movable circuit board, and the driving mechanism. In this way, the photosensitive chip may be electrically connected to the assembly circuit board by using the chip circuit board, the movable circuit board and the driving mechanism.

In a possible implementation, the second mounting space includes space enclosed by a protruding part of a top of the base. The camera module further includes a first housing. The first housing is fastened to the base. The first housing is disposed to cover the stabilization motor. A top wall of the first housing includes a protruding portion and a flat portion. The protruding part of the top of the base is located in space enclosed by the protruding portion of the top wall of the first housing. It may be understood that the first housing may protect the stabilization motor.

In a possible implementation, the flat portion of the first housing is provided with avoidance space. The avoidance space communicates internal space of the first housing with an outside of an inside of the first housing.

The camera module further includes an assembly circuit board. The assembly circuit board includes a first part, a second part, and a third part. The first part includes a first end part and a second end part. The second part is connected between the third part and the second end part of the first part. There is a height difference between the third part and the first part. The first part is fastened to the flat portion of the top wall of the first housing. The second end part of the first part is electrically connected to the driving mechanism through the avoidance space of the first housing. The second part and the third part are fastened to the protruding portion of the top wall of the first housing. The third part is electrically connected to a lens motor of the focusing lens.

It may be understood that the assembly circuit board may be electrically connected to the driving mechanism, or may be electrically connected to the lens motor of the focusing lens. The assembly circuit board may further be electrically connected to the photosensitive chip. The assembly circuit board serves a plurality of purposes.

In a possible implementation, the camera module further includes a first sealing part. The first sealing part is fastened to the flat portion of the top wall of the first housing, and covers a gap between the second end part of the first part of the assembly circuit board and the avoidance space. In this way, dust or impurities outside the camera module do not enter the stabilization motor through the avoidance space.

In a possible implementation, the camera module further includes a first sealing block and a second sealing block. The first sealing block is fastened to a second lens tube of the prime lens, the base, and the first housing. The second sealing block is fastened to the second lens tube of the prime lens and the base. The first sealing block and the second sealing block are respectively located on two sides of the protruding part of the base.

It may be understood that the first sealing block and the second sealing block may jointly seal a gap between the second lens tube of the prime lens and the base, to prevent dust or impurities outside the camera module from entering the stabilization motor through the gap between the prime lens and the base.

In a possible implementation, the prime lens includes the second lens tube and a second lens. The second lens is fastened to the second lens tube. The second lens tube is fastened in the second mounting space. The camera module further includes a first thermal conductive part. The first thermal conductive part wraps a circumferential side surface of the second lens tube and surrounds the second lens.

It may be understood that, when the photosensitive chip is in a working state, the photosensitive chip generates heat and radiates the heat to a periphery of the second lens tube of the prime lens. In this case, the first thermal conductive part may absorb a part of heat, and conduct a part of heat to an outside of the stabilization motor by using the first thermal conductive part, to avoid uneven temperature of the second lens caused by absorption of a part of heat by the second lens of the prime lens. This prevents the light from deflecting in a propagation process of the second lens and image quality in image obtaining of the camera module from decreasing.

In a possible implementation, a material of the first thermal conductive part is graphene, a graphite sheet, copper foil, conductive fabric, or thermal gel. The thermal conductivity of the first thermal conductive part is good.

According to a second aspect, an embodiment of this application provides an electronic device. The electronic device includes a housing and the foregoing camera module. The camera module is disposed in the housing. It may be understood that, when the camera module is used in the electronic device, because a photosensitive chip of the camera module may be disposed with a large photosensitive surface and may simultaneously implement wide aperture, telephoto, and macro photography, in the electronic device, the photosensitive chip may also be configured with a large photosensitive surface and may also simultaneously implement large aperture, telephoto, and macro photography.

In a possible implementation, a first direction and a third direction are a thickness direction of the electronic device. In this way, the photosensitive surface of a chip module may not be disposed vertically. In other words, a size of the photosensitive surface of the chip module may not be limited by a size of the electronic device in the thickness direction, and a large photosensitive surface design of the photosensitive surface of the chip module can be implemented.

### BRIEF DESCRIPTION OF DRAWINGS

To describe technical solutions in embodiments of this application, the following describes the accompanying drawings used in embodiments of this application.
FIG. 1 is a schematic diagram of a structure of an electronic device according to an embodiment of this application;
FIG. 2 is a schematic sectional view of a part of the electronic device shown in FIG. 1 at a line A-A;
FIG. 3 is a schematic exploded view of a part of a camera module of the electronic device shown in FIG. 1;
FIG. 4 is a schematic exploded view of a part of a reflection assembly shown in FIG. 3;
FIG. 5 is a schematic exploded view of a part of a focusing lens shown in FIG. 3;
FIG. 6 is a schematic exploded view of a part of a stabilization assembly shown in FIG. 3;
FIG. 7 is a schematic exploded view of a part of a stabilization motor shown in FIG. 6;
FIG. 8 is a schematic diagram of a structure of a base shown in FIG. 7 from different angles;
FIG. 9 is a schematic diagram of a structure of a part of a stabilization assembly shown in FIG. 3;
FIG. 10 is a schematic exploded view of a chip module shown in FIG. 6;
FIG. 11 is a schematic sectional view of a chip module shown in FIG. 6 at a line B-B;
FIG. 12 is a schematic sectional view of a part of a stabilization assembly shown in FIG. 3 at a line C-C;
FIG. 13 is a schematic diagram of a structure of a first housing shown in FIG. 6 from different angles;
FIG. 14 is a schematic sectional view of a part of a stabilization assembly shown in FIG. 3 at a line C-C;
FIG. 15 is a schematic diagram of a structure of an assembly circuit board shown in FIG. 6 from another angle;
FIG. 16 is a schematic diagram of a structure of a stabilization assembly shown in FIG. 3 from a different angle;
FIG. 17 is a schematic diagram of a structure of a part of a camera module shown in FIG. 1;
FIG. 18 is a schematic sectional view of a part of a camera module shown in FIG. 1;
FIG. 19 is a schematic diagram of assembling a first thermal conductive part and a prime lens from different angles according to an embodiment of this application;
FIG. 20 is a schematic sectional view of a part of a first thermal conductive part, a prime lens, and a stabilization assembly according to an embodiment of this application;
FIG. 21 is a schematic diagram of a structure of another implementation of a camera module according to an embodiment of this application;
FIG. 22 is a schematic diagram of fitting between a first sealing block, a second sealing block, a prime lens, and a part of stabilization assembly from different angles according to an embodiment of this application;
FIG. 23 is a schematic sectional view of a first housing, a first sealing block, a second sealing block, a prime lens, and a part of stabilization assembly according to an embodiment of this application; and
FIG. 24 is a schematic diagram of a structure of still another implementation of a camera module according to an embodiment of this application.

### DESCRIPTION OF EMBODIMENTS

For ease of understanding, the following first explains and describes English abbreviations and related technical terms used in embodiments of this application.

Object-side surface: When a lens is used as a boundary, a side on which a photographed object is located is an object side, and a surface that is of the lens and that is close to the object side is referred to as the object-side surface.

Image-side surface: When a lens is used as a boundary, a side on which an image of a photographed object is located is an image side, and a surface that is of the lens and that is close to the image side is referred to as the image-side surface.

An aperture value, also known as F number (Fno), is a relative value (a reciprocal of a relative aperture) obtained by dividing a focal length of a lens by an entrance pupil diameter of the lens. As an aperture value decreases, an aperture increases, and an amount of admitted light in a same unit time becomes larger. As an aperture value increases, an aperture decreases, a depth of field decreases, and a background of a photo is blurred, which is similar to effect of a telephoto lens.

An optical axis is an axis that perpendicularly passes through a center of a lens. An optical axis of a lens is an axis that passes through a center of each lens of a lens. When light that is parallel to an optical axis enters a convex lens, an ideal convex lens converges all the light to one point behind the lens. The point to which all the light converges is a focal point.

"A plurality of" may be at least two.

In the descriptions of embodiments of this application, it should be noted that, unless otherwise specified and limited, the term "connection" should be understood in a broad sense. For example, "connection" may be a detachable connection, or a non-detachable connection, and may be a direct connection, or an indirect connection through an intermediate medium. "Fixed connection" means a connection to each other and a relative position relationship unchanged after the connection. Orientation terms mentioned in embodiments of this application, for example, "top", "bottom", "inside", and "outside", are merely directions based on the accompanying drawings. Therefore, the orientation terms are used to better and more clearly describe and understand embodiments of this application, instead of indicating or implying that a specified apparatus or element should have a specific orientation, and be constructed and operated in a specific orientation. Therefore, this cannot be understood as a limitation on embodiments of this application. A and/or B describes only an association relationship between associated objects, and indicates that three relationships may exist: Only A exists, both A and B exist, and only B exists. Terms such as "first" and "second" mentioned below are merely intended for a purpose of description, and shall not be understood as an indication or implication of relative importance or implicit indication of a quantity of indicated technical features. Therefore, a feature defined with "first" or "second" may explicitly or implicitly include one or more features. In addition, in embodiments of this application, mathematical concepts such as "parallel" and "vertical" are mentioned. These limitations are all relative to the state of the art, and are not strictly defined in a mathematical sense. A slight deviation is allowed, for example "parallel" may mean approximately parallel and "vertical" may mean approximately vertical. For example, that A and B are parallel means that A and B are parallel or approximately parallel, and an included angle between A and B may be 0 degrees to 10 degrees.

The following describes embodiments of this application with reference to the accompanying drawings in embodiments of this application.

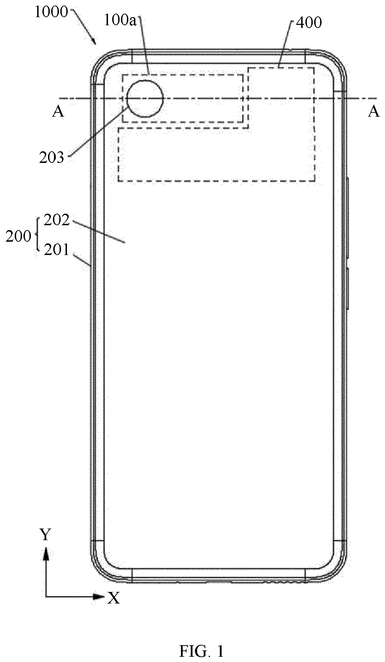

FIG. 1 is a schematic diagram of a structure of an electronic device 1000 according to an embodiment of this application. The electronic device 1000 may be a device having a photographing function, for example, a mobile phone, a tablet personal computer (tablet personal computer), a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

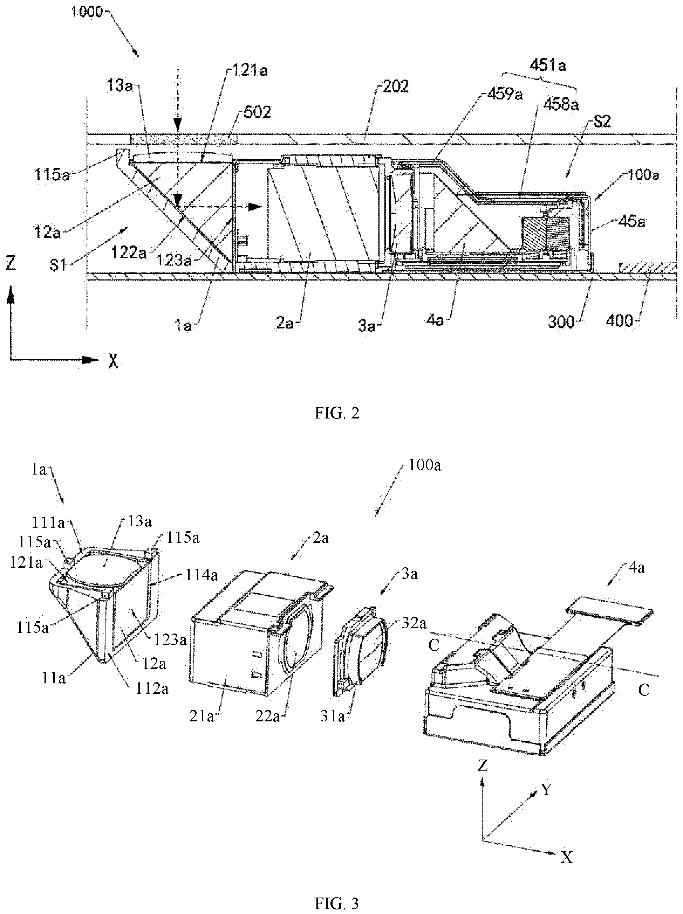

Refer to FIG. 1 and FIG. 2. FIG. 2 is a schematic sectional view of a part of the electronic device 1000 shown in FIG. 1 at a line A-A. The electronic device 1000 includes a camera module 100a, a housing 200, a screen 300, and a host circuit board 400. It should be noted that FIG. 1, FIG. 2, and the following related accompanying drawings show only an example of some components included in the electronic device 1000. Actual shapes, actual sizes, actual locations, and actual construction of these components are not limited in FIG. 1, FIG. 2, and the following accompanying drawings. In addition, because the host circuit board 400 and the camera module 100a are internal structures of the electronic device 1000, examples of the host circuit board 400 and the camera module 100a are shown by using dashed lines in FIG. 1. For ease of description, it is specified that a width direction of the electronic device 1000 is an X-axis. A length direction of the electronic device 1000 is a Y-axis. A thickness direction of the electronic device 1000 is a Z-axis. It may be understood that a coordinate system of the electronic device 1000 may be flexibly set according to a specific actual requirement.

In another embodiment, when the electronic device 1000 is a device in another form, the electronic device 1000 may not include the screen 300 or the host circuit board 400.

For example, the housing 200 includes a frame 201 and a rear cover 202. The rear cover 202 and the screen 300 are respectively fastened to two sides of the frame 201. The screen 300, the frame 201, and the rear cover 202 may jointly enclose an inside of the electronic device 1000. The inside of the electronic device 1000 may be configured to place a component of the electronic device 1000, for example, a battery, a receiver, or a microphone.

In this implementation, the screen 300 may be configured to display an image and the like. The screen 300 may be a flat screen, or may be a curved screen. The display of the screen 300 may be an organic light-emitting diode (organic light-emitting diode, OLED) display, an active-matrix organic light-emitting diode (active-matrix organic light-emitting diode, AMOLED) display, a liquid crystal display (liquid crystal display, LCD), or the like.

Refer to FIG. 1 and FIG. 2 again. The host circuit board 400 is fastened in the electronic device 1000. A chip such as a central processing unit (central processing unit, CPU), a graphics processing unit (graphics processing unit, GPU), or a universal flash storage (universal flash storage, UFS) may be disposed in the host circuit board 400.

In addition, the camera module 100a is disposed in the electronic device 1000. The camera module 100a may be configured to catch light that is outside the electronic device 1000. The camera module 100a may be electrically connected to the host circuit board 400. In this way, the camera module 100a and the host circuit board 400 may transmit a signal to each other. It may be understood that the camera module 100a may be a rear-facing camera module 100a, a front-facing camera module 100a, or the like. In this implementation, the camera module 100a is described by using the rear-facing camera module 100a as an example.

For example, the rear cover 202 includes a light transmission part 502. A material of the light transmission part 502 may be a transparent material, for example, glass or plastic. In this way, light outside the electronic device 1000 may pass through the light transmission part 502 and enter the electronic device 1000. The camera module 100a catches light that enters the electronic device 1000. The light transmission part 502 may be disposed in a plurality of manners. For example, the light transmission part 502 may use a fitting structure of a decoration member and a cover. A structure of the light transmission part 502 is not specifically limited in this application.

FIG. 3 is a schematic exploded view of a part of a camera module 100a of the electronic device 1000 shown in FIG. 1. The camera module 100a includes a reflection assembly 1a, a focusing lens 2a, a prime lens 3a, and a stabilization assembly 4a.

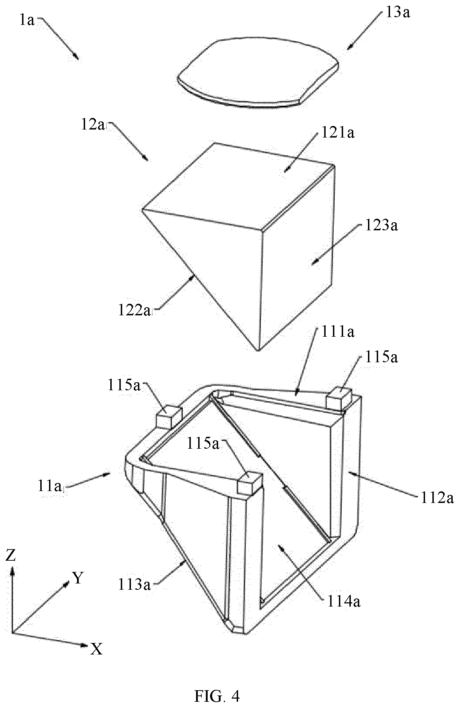

Refer to FIG. 4 and FIG. 3. FIG. 4 is a schematic exploded view of a part of the reflection assembly 1a shown in FIG. 3. The reflection assembly 1a includes a reflector holder 11a, a first reflector 12a, and a planoconvex lens 13a. The first reflector 12a may be a triangular prism, or may be a reflector. The first reflector 12a in this embodiment is described by using the triangular prism as an example. In addition, the planoconvex lens 13a may be a lens whose one surface is a flat surface and whose other surface is a convex surface. In this implementation, the convex surface of the planoconvex lens 13a is an object-side surface. The flat surface of the planoconvex lens 13a is an image-side surface. In another embodiment, the reflection assembly 1a may alternatively not include the reflector holder 11a.

For example, the reflector holder 11a is of a triangular prism structure. The reflector holder 11a includes a first surface 111a, a second surface 112a, and a third surface 113a. The third surface 113a is connected between the first surface 111a and the second surface 112a. The first surface 111a and the second surface 112a may be disposed at a right angle. The first surface 111a and the third surface 113a may be disposed at an acute angle. The second surface 112a and the third surface 113a may be disposed at an acute angle. In addition, the reflector holder 11a includes first mounting space 114a. The first mounting space 114a forms an opening on the first surface 111a and the second surface 112a. In addition, the reflector holder 11a includes a convex hull 115a. The convex hull 115a is disposed to protrude from the first surface 111a. The convex hull 115a is located around the first mounting space 114a and is disposed around the first mounting space 114a. It should be understood that there may be one or more convex hulls 115a. When there is one convex hull 115a, the convex hull 115a may be of a semi-ring structure that is disposed around the first mounting space 114a. When there are a plurality of convex hulls 115a, the plurality of convex hulls 115a are disposed at intervals. There are three convex hulls 115a in this implementation.

For example, the first reflector 12a includes a first light-entering surface 121a, a first reflective surface 122a, and a first light-exiting surface 123a. The first reflective surface 122a is connected between the first light-entering surface 121a and the first light-exiting surface 123a. The first light-entering surface 121a is an object-side surface of the first reflector 12a, and the first light-exiting surface 123a is an image-side surface of the first reflector 12a.

Refer to FIG. 3 again and FIG. 4. In an implementation, the first reflector 12a is fastened in the first mounting space 114a of the reflector holder 11a. The first light-entering surface 121a of the first reflector 12a and the first surface 111a of the reflector holder 11a face a same side. The first light-exiting surface 123a of the first reflector 12a and the second surface 112a of the reflector holder 11a face a same side.

In addition, the flat surface of the planoconvex lens 13a is fastened to the first light-entering surface 121a of the first reflector 12a. For example, the flat surface of the planoconvex lens 13a may be fastened to the first light-entering surface 121a of the first reflector 12a through bonding, or the like. In another embodiment, the planoconvex lens 13a and the first reflector 12a may alternatively be of an integral structure. For example, the planoconvex lens 13a and the first reflector 12a may be of an integral structure by using a process such as compression molding or grinding molding.

In an implementation, a distance between the convex surface of the planoconvex lens 13a and the first surface 111a is less than a distance between a top surface of the convex hull 115a and the first surface 111a. That is, the first surface 111a of the reflector holder 11a is used as a reference surface, and a height of the planoconvex lens 13a is less than a height of the convex hull 115a. In this way, the planoconvex lens 13a is located in an area enclosed by the convex hulls 115a. The planoconvex lens 13a is not likely to collide with another component. For example, the first surface 111a is used as the reference surface, and a difference between the height of the convex hull 115a and the height of the planoconvex lens 13a is greater than 0.05 millimeter (unit: mm).

In an implementation, the planoconvex lens 13a may be configured for light beam shrinking. The first reflector 12a may be configured to direct an optical axis of the camera module 100a from a first direction to a second direction. The second direction intersects the first direction. In this implementation, the first direction is a negative direction of the Z-axis. The second direction is a positive direction of the X-axis. In this case, the second direction is perpendicular to the first direction. Specific orientations of the first direction and the second direction are not strictly limited in another embodiment.

Refer to FIG. 2 and FIG. 3. In an implementation, the first light-entering surface 121a of the first reflector 12a and the light transmission part 502 are disposed opposite to each other. In this case, when light outside the electronic device 1000 passes through the light transmission part 502 and enters the electronic device 1000, the light may enter the planoconvex lens 13a through the convex surface of the planoconvex lens 13a. The light shrinks by using the planoconvex lens 13a and then exits through the flat surface of the planoconvex lens 13a. In this case, the light then enters the first reflector 12a through the first light-entering surface 121a of the first reflector 12a. Then, the light is reflected by the first reflective surface 122a of the first reflector 12a, and the light that propagates in the negative direction of the Z-axis is reflected and propagates in the positive direction of the X-axis. The light then exits through the first light-exiting surface 123a of the first reflector 12a. An example of a path of the light is shown by using dashed lines with arrows in FIG. 2.

For example, the convex hull 115a of the reflector holder 11a may abut against the rear cover 202. In this way, when the camera module 100a is impacted or shaken, the planoconvex lens 13a does not directly collide with the light transmission part 502, so that no damage is caused to the planoconvex lens 13a. In addition, a design of the convex hull 115a of the reflector holder 11a may also protect the planoconvex lens 13a of the first reflector 12a from contact with the outside in an assembling process and from scratches, smears, or the like.

In an implementation, when implementing light reflection, the first reflective surface 122a of the first reflector 12a may further correct an aberration such as astigmatism, and may increase a length of an optical path. This further improves image quality. For example, the first reflective surface 122a of the first reflector 12a may be a flat surface to have good processing performance. In some other implementations, the first reflective surface 122a of the first reflector 12a may alternatively be a spherical surface, a cylindrical surface, or a free-form surface. The spherical surface may be a convex surface or a concave surface. The cylindrical surface has curvature in one direction and extends in a straight line in another direction. For example, a high reflective film may be further disposed on the first reflective surface 122a of the first reflector 12a, to improve reflection efficiency, so that a light path enters a subsequent optical element after being completely reflected.

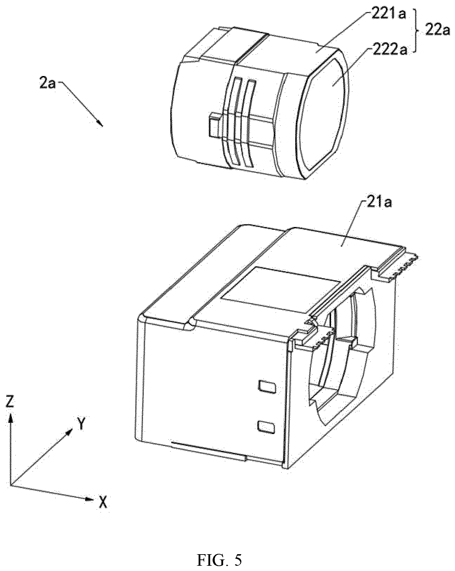

Refer to FIG. 5 and FIG. 3. FIG. 5 is a schematic exploded view of a part of the focusing lens 2a shown in FIG. 3. In an implementation, the focusing lens 2a includes a lens motor 21a and a lens 22a. The lens 22a is fastened to the lens motor 21a. The lens motor 21a is configured to drive the lens 22a to move, so that a focusing function is implemented. The lens motor 21a may be a voice coil motor, or may be a shape memory alloy (shape memory alloy, SMA) motor. A structure of the lens motor 21a is not limited in this implementation. In addition, the lens 22a includes a first lens tube 221a and a first lens 222a. The first lens 222a is fastened in the first lens tube 221a. There may be one or more first lenses 222a.

Refer to FIG. 3 again. In an implementation, the prime lens 3a includes a second lens tube 31a and a second lens 32a. The second lens 32a is fastened in the second lens tube 31a. The second lens 32a may be configured to compensate for image quality, to improve image obtaining quality of the camera module 100a. There may be one or more second lenses 32a. There is one second lens 32a in this implementation.

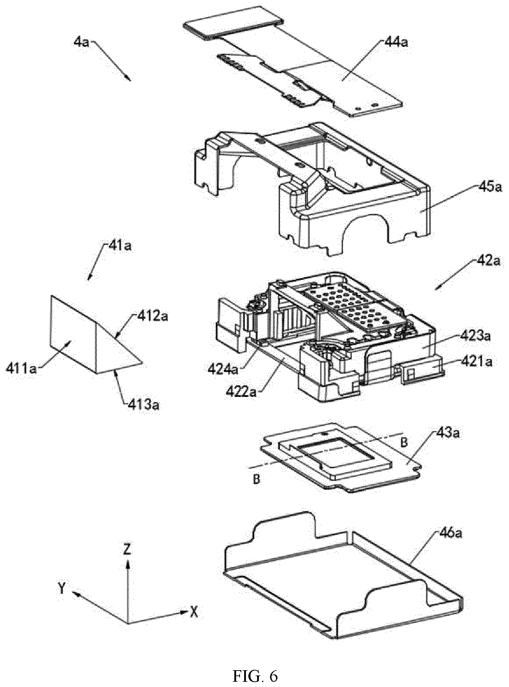

FIG. 6 is a schematic exploded view of a part of the stabilization assembly 4a shown in FIG. 3. The stabilization assembly 4a includes a second reflector 41a, a stabilization motor 42a, a chip module 43a, an assembly circuit board 44a, a first housing 45a, and a second housing 46a. The second reflector 41a may be a triangular prism, or may be a reflector. The second reflector 41a in this embodiment is described by using the triangular prism as an example.

In an implementation, the second reflector 41a includes a second light-entering surface 411a, a second reflective surface 412a, and a second light-exiting surface 413a. The second reflective surface 412a is connected between the second light-entering surface 411a and the second light-exiting surface 413a. The second light-entering surface 411a and the second reflective surface 412a may be disposed at an acute angle. The second light-exiting surface 413a and the second reflective surface 412a may be disposed at an acute angle. The second light-entering surface 411a and the second light-exiting surface 413a may be disposed at a right angle. The second light-entering surface 411a is an object-side surface of the second reflector 41a. The second light-exiting surface 413a is an image-side surface of the second reflector 41a.

It may be understood that the second reflector 41a is configured to direct an optical axis of the camera module 100a from the second direction to a third direction. The third direction intersects the second direction. In this implementation, the third direction is a negative direction of the Z-axis, that is, the third direction is parallel to the first direction. In this case, the third direction is perpendicular to the second direction. A specific orientation of the third direction is not strictly limited in another embodiment.

In an implementation, when implementing light reflection, the second reflective surface 412a of the second reflector 41a may further correct an aberration such as astigmatism. This further improves image quality. For example, the second reflective surface 412a of the second reflector 41a may be a flat surface to have good processing performance. In some other implementations, the second reflective surface 412a of the second reflector 41a may alternatively be a spherical surface, a cylindrical surface, or a free-form surface. The spherical surface may be a convex surface or a concave surface. The cylindrical surface has curvature in one direction and extends in a straight line in another direction. For example, a high reflective film may be further disposed on the second reflective surface 412a of the second reflector 41a, to improve reflection efficiency, so that a light path enters a subsequent optical element after being completely reflected.

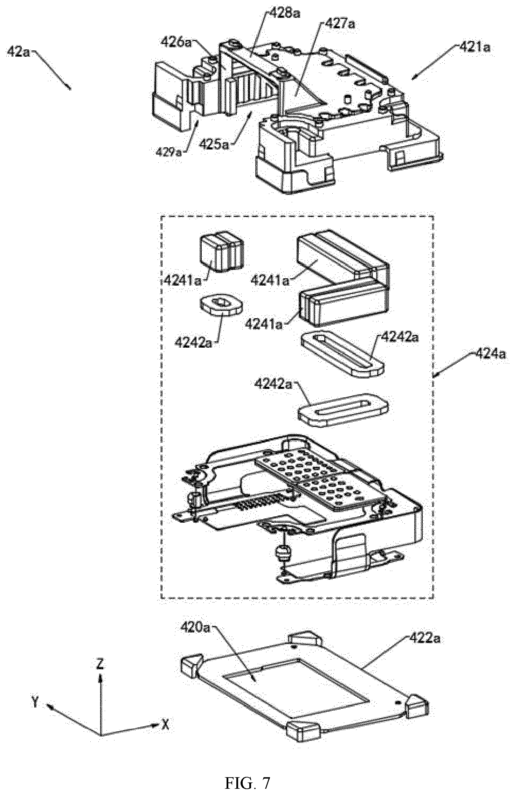

Refer to FIG. 7 and FIG. 6. FIG. 7 is a schematic exploded view of a part of the stabilization motor 42a shown in FIG. 6. The stabilization motor 42a includes a base 421a, a movable circuit board 422a, and a driving part 424a (also referred to as a driving mechanism). The movable circuit board 422a is provided with a through hole 420a. The through hole 420a passes through two surfaces that are of the movable circuit board 422a and that are disposed opposite to each other.

The movable circuit board 422a is movably connected to the base 421a. Specifically, the movable circuit board 422a may move on an X-Y plane relative to the base 421a or tilt relative to a Z-axis direction. In this case, the movable circuit board 422a does not have a capability to move in the Z-axis direction, or has a tiny stroke that is far less than a focusing stroke, to reduce a thickness of the stabilization motor 42a in the Z-axis direction. For example, the movable circuit board 422a may be movably connected to the base 421a by using a suspension line. The suspension line may deform. For example, when a driving force in an X-axis direction is applied to the movable circuit board 422a, the suspension line may deform in the X-axis direction. In this case, the movable circuit board 422a may move in the X-axis direction relative to the base 421a.

In an implementation, the driving part 424a includes a magnet 4241a and a coil 4242a. One of the magnet 4241a and the coil 4242a may be fastened to the movable circuit board 422a, and the other of the magnet 4241a and the coil 4242a may be fastened to the base 421a. The coil 4242a is configured to cooperate with the magnet 4241a to drive the movable circuit board 422a to move on the X-Y plane relative to the base 421a or tilt relative to the Z-axis direction when the coil is energized. For example, there are three sets of magnets 4241a and coils 4242a in this implementation. One set of a magnet 4241a and a coil 4242a is configured to drive the movable circuit board 422a to move in the X-axis direction relative to the base 421a. One set of a magnet 4241a and a coil 4242a is configured to drive the movable circuit board 422a to move in the Y-axis direction relative to the base 421a. One set of a magnet 4241a and a coil 4242a is configured to drive the movable circuit board 422a to tilt relative to the Z-axis direction.

For example, the coil 4242a is fastened to the movable circuit board 422a, and the magnet 4241a is fastened to the base 421a. In this way, it is easy for the coil 4242a to be electrically connected to the movable circuit board 422a, that is, an electrical connection manner is simple.

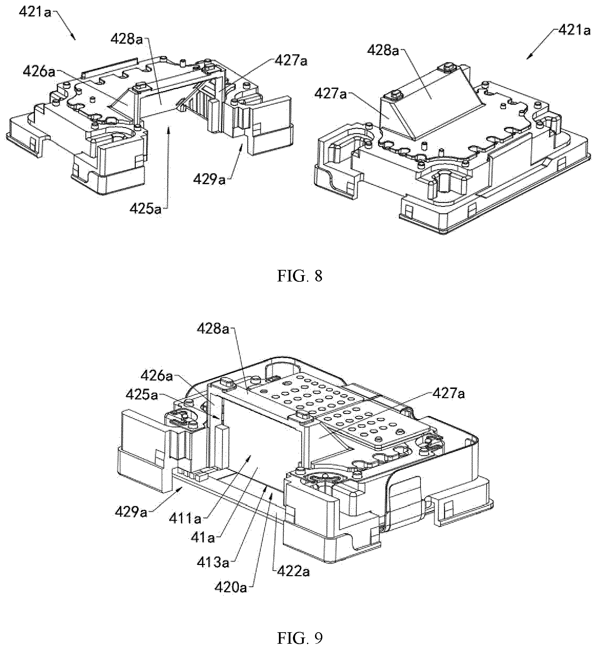

Refer to FIG. 8 and FIG. 7. FIG. 8 is a schematic diagram of a structure of the base 421a shown in FIG. 7 from different angles. The base 421a encloses second mounting space 425a. For example, a part of a top of the base 421a protrudes to form one part of the second mounting space 425a. The other part of the second mounting space 425a is enclosed by a side part of the base 421a. The second mounting space 425a includes a first side wall 426a, a second side wall 427a, and a third side wall 428a. The first side wall 426a and the second side wall 427a are disposed opposite to each other. The third side wall 428a is connected between the first side wall 426a and the second side wall 427a. The third side wall 428a is disposed in a tilted manner.

In an implementation, movable space 429a is enclosed by a bottom of the base 421a. The movable space 429a communicates with the second mounting space 425a.

FIG. 9 is a schematic diagram of a structure of a part of the stabilization assembly 4a shown in FIG. 3. The movable circuit board 422a is located in the movable space 429a. The second reflector 41a is fastened to the second mounting space 425a of the base 421a. The second light-entering surface 411a of the second reflector 41a is exposed to an outside of the base 421 through the second mounting space 425a. The second light-exiting surface 413a of the second reflector 41a faces the through hole 420a of the movable circuit board 422a. The second reflector 41a is located at a top of the movable circuit board 422a. In this implementation, two side surfaces of the second reflector 41a and the second reflective surface 412a (refer to FIG. 6) may be fastened to the first side wall 426a, the second side wall 427a, and the third side wall 428a respectively by using an adhesive.

For example, the base 421a may further include a limiting block structure. When the second reflector 41a is fastened in the second mounting space 425a of the base 421a, the limiting block may limit the second reflector 41a, so that stability of connection between the second reflector 41a and the base 421a is improved.

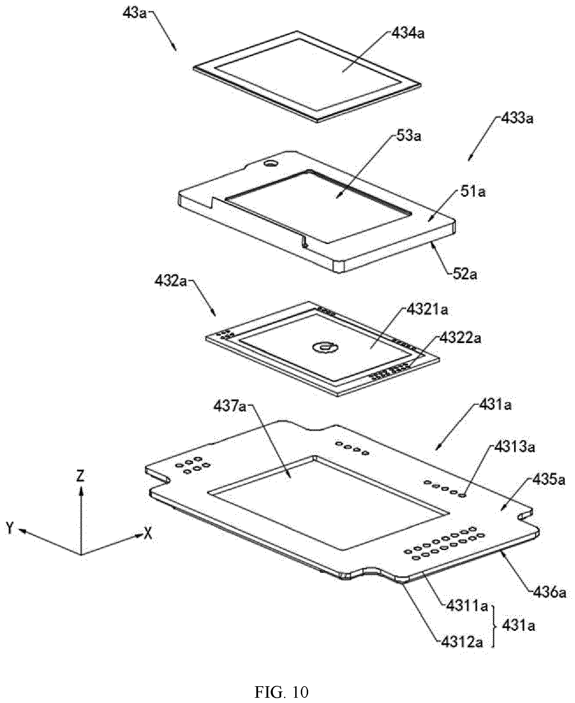

FIG. 10 is a schematic exploded view of the chip module 43a shown in FIG. 6. The chip module 43a includes a chip circuit board 431a, a photosensitive chip 432a, a light filter holder 433a, and a light filter 434a. The photosensitive chip 432a may also be referred to as an image sensor, or may also be referred to as a photosensitive element. The photosensitive chip 432a may be configured to catch the light, and convert optical image information carried in the light into an electrical signal. The photosensitive element may be a semiconductor chip, and a surface of the photosensitive element includes hundreds of thousands to millions of photodiodes that generate charges when exposed to light. The photosensitive element may be a charge coupled device (charge coupled device, CCD), or may be a complementary metal-oxide conductor device (complementary metal-oxide semiconductor, CMOS). A charge coupled device is made of a highly photosensitive semiconductor material, and can convert light into charges. The charge coupled device includes many photosensitive units, which are usually in a unit of megapixels. When a surface of the charge coupled device is exposed to light, each photosensitive unit reflects a charge to a component. After signals generated by all the photosensitive units are added up, a complete picture is formed. The complementary metal-oxide conductor device is a semiconductor that is mainly made of two elements of silicon and germanium, so that a semiconductor with an N (carrying a negative charge) electrode and a semiconductor with a P (carrying a positive charge) electrode coexist in the complementary metal-oxide conductor device. A current generated through complementary effect between the two types of semiconductors may be recorded and interpreted into an image by a processing chip. In another implementation, the chip module 43a may alternatively not include a chip circuit board 431a, a light filter holder 433a, and a light filter 434a. In this case, the chip module 43a is the photosensitive chip 432a.

For example, the photosensitive chip 432a includes a photosensitive surface 4321a and a first pin end 4322a. Both the photosensitive surface 4321a and the first pin end 4322a face a same side. The first pin end 4322a may be disposed around the photosensitive surface 4321a. In an implementation, a diameter of the first pin end 4322a is 0.07 millimeter. It may be understood that there may be one or more first pin ends 4322a. This implementation uses a plurality of first pin ends 4322a as an example for description.

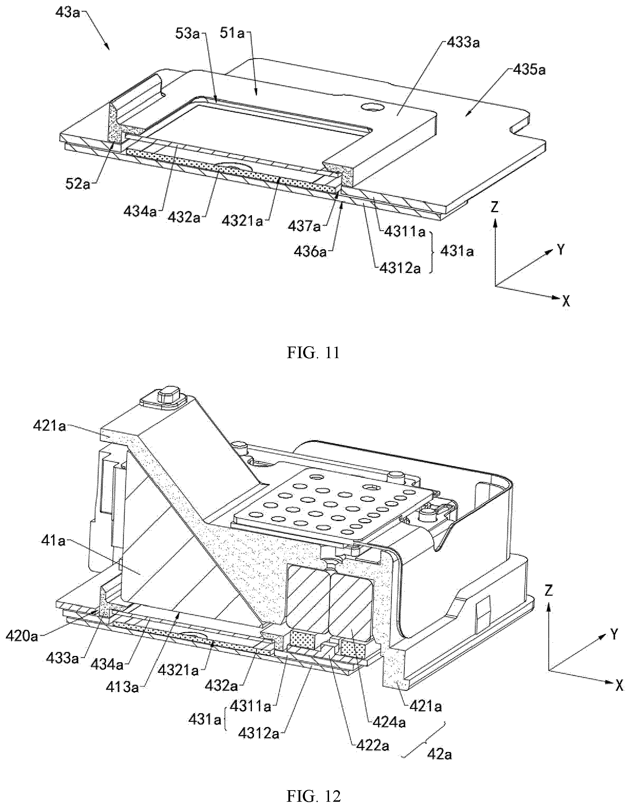

Refer to FIG. 11 and FIG. 10. FIG. 11 is a schematic sectional view of the chip module 43a shown in FIG. 6 at a line B-B. In an implementation, the chip circuit board 431a includes a chip circuit board body 4311a and a stiffening plate 4312a that are disposed in a stacked manner. In this case, a top surface of the chip circuit board body 4311a is a top surface 435a of the chip circuit board 431a. A bottom surface of the stiffening plate 4312a is a bottom surface 436a of the chip circuit board 431a. The stiffening plate 4312a is configured to improve strength of the chip circuit board body 4311a. In another implementation, the chip circuit board 431a may alternatively not include a stiffening plate 4312a.

In an implementation, the chip circuit board body 4311a may use an FR-4 dielectric plate, or may use a Rogers (Rogers) dielectric plate, or may use a hybrid dielectric plate of Rogers and FR-4, or the like. The stiffening plate 4312a may be a stainless steel plate. In this case, the stiffening plate 4312a has good heat conduction effect.

In an implementation, the chip circuit board body 4311a includes a second pin end 4313a. A size of the second pin end 4313a is greater than a size of the first pin end 4322a. It may be understood that the size may be a parameter such as a diameter or an area. In an implementation, a diameter of the second pin end 4313a is in a range from 0.3 millimeter to 0.5 millimeter. It may be understood that there may be one or more second pin ends 4313a. This implementation uses a plurality of second pin ends 4313a as an example for description.

In an implementation, the second pin end 4313a is located at a peripheral edge of the chip circuit board body 4311a.

In an implementation, the chip circuit board 431a is provided with a sunken recess 437a. The sunken recess 437a forms an opening on the top surface 435a of the chip circuit board 431a. Specifically, the sunken recess 437a is located in the chip circuit board body 4311a, and forms an opening on the top surface and a bottom surface of the chip circuit board body 4311a. In another implementation, the stiffening plate 4312a may be provided with a part of the sunken recess 437a. In another implementation, the chip circuit board 431a may alternatively not be provided with a sunken recess 437a.

Refer to FIG. 11 and FIG. 10. In an implementation, the light filter holder 433a includes a top surface 51a and a bottom surface 52a that are disposed opposite to each other. The light filter holder 433a is provided with a light transmission hole 53a. The light transmission hole 53a penetrates the top surface 51a and the bottom surface 52a of the light filter holder 433a.

In addition, the photosensitive chip 432a is fastened to the chip circuit board 431a, and is electrically connected to the chip circuit board 431a. In this way, the photosensitive chip 432a and the chip circuit board 431a may transmit an electrical signal to each other. For example, the photosensitive chip 432a may be mounted on the chip circuit board 431a by using a chip on board (chip on board, COB) technology. For example, the photosensitive chip 432a is located at a middle part of the chip circuit board 431a.

For example, the photosensitive chip 432a may be located in the sunken recess 437a. The photosensitive chip 432a is fastened to the stiffening plate 4312a. In this case, in the Z-axis direction, the photosensitive chip 432a and the chip circuit board 431a have an overlapping area, so that an increase in a thickness of the camera module 100a in the Z-axis direction caused by stacking of the photosensitive chip 432a on the chip circuit board 431a is avoided. In addition, because the stiffening plate 4312a is a stainless steel plate, the stiffening plate 4312a may quickly conduct heat generated by the photosensitive chip 432a.

For example, the photosensitive chip 432a is electrically connected to the chip circuit board body 4311a. For example, the first pin end 4322a of the photosensitive chip 432a is electrically connected to the second pin end 4313a of the chip circuit board body 4311a. When there are a plurality of first pin ends 4322a and a plurality of second pin ends 4313a, the plurality of first pin ends 4322a are electrically connected to the plurality of second pin ends 4313a in a one-to-one correspondence.

Refer to FIG. 11 and FIG. 10. In an implementation, the bottom surface 52a of the light filter holder 433a is fastened to the top surface 435a of the chip circuit board 431a. The photosensitive chip 432a and the light transmission hole 53a of the light filter holder 433a are disposed opposite to each other. For example, the light filter holder 433a may be fastened to the chip circuit board 431a by using glue or adhesive tape.

In addition, the light filter 434a is fastened to the light filter holder 433a, and the light filter 434a is located in the light transmission hole 53a. The light filter 434a and the photosensitive surface 4321a of the photosensitive chip 432a are disposed opposite to each other. The light filter 434a may be configured to filter out noise of the light, to ensure that an image photographed by the camera module 100a has good definition. The light filter 434a may be but is not limited to a blue glass light filter. For example, the light filter 434a may further be a reflective infrared light filter or a dual-pass light filter (the dual-pass light filter may allow visible light and infrared light in the light to simultaneously pass through, allow visible light and another light of a specified wavelength (for example, ultraviolet light) in the light to simultaneously pass through, or allow infrared light and another light of a specified wavelength (for example, ultraviolet light) to simultaneously pass through). In another implementation, a light filter 434a may alternatively not be located in the light transmission hole 53a. The light filter 434a may be fastened to the top surface 51a or the bottom surface 52a of the light filter holder 433a.

In an implementation, the stabilization assembly 4a further includes electronic components (for example, a capacitor, an inductor, a resistor, and the like). The electronic component is fastened to the chip circuit board 431a. The electronic component is electrically connected to the photosensitive chip 432a by using the chip circuit board 431a. The electronic component is configured to assist the photosensitive chip 432a in performing signal processing on the caught light. In another implementation, the electronic component may alternatively be disposed on the movable circuit board 422a (refer to FIG. 7) of the stabilization motor 42a (refer to FIG. 7) or another circuit board. Specifically, this is not limited in this implementation.

FIG. 12 is a schematic sectional view of a part of the stabilization assembly 4a shown in FIG. 3 at a line C-C. In an implementation, the chip circuit board body 4311a is fastened to a surface that is of the movable circuit board 422a and that is away from the second reflector 41a. In addition, the first pin end 4322a (refer to FIG. 10) of the photosensitive chip 432a is electrically connected to the movable circuit board 422a by using the second pin end 4313a (refer to FIG. 10) of the chip circuit board body 4311a. For example, the second pin end 4313a of the chip circuit board 431a may be fastened to the movable circuit board 422a by using a welding process. In this case, a connection between the chip circuit board 431a and the movable circuit board 422a is firmer and stabler, and can be electrically connected to each other.

For example, a part of the light filter holder 433a is located in the through hole 420a of the movable circuit board 422a, and a part of the light filter holder 433a is located on a side that is of the movable circuit board 422a and that is away from the chip circuit board 431a. In this case, in the Z-axis direction, the light filter holder 433a and the movable circuit board 422a have an overlapping area, so that stacking of the light filter holder 433 on the movable circuit board 422a is not likely to cause an increase in a thickness of the camera module 100a.

In an implementation, the light filter 434a is located between the second light-exiting surface 413a of the second reflector 41a and the photosensitive surface 4321a of the photosensitive chip 432a. The light filter 434a and the second light-exiting surface 413a of the second reflector 41a are disposed opposite to each other. In this implementation, the through hole 420a is located between the photosensitive surface 4321a of the photosensitive chip 432a and the second light-exiting surface 413a of the second reflector 41a. In this way, when the light exits through the second light-exiting surface 413a of the second reflector 41a, the light may be propagated to the photosensitive surface 4321a of the photosensitive chip 432a through the light filter 434a. The photosensitive chip 432a catches light.

It may be understood that, because the photosensitive chip 432a, the light filter holder 433a, and the light filter 434a are fastened to the chip circuit board 431a, and the chip circuit board 431a is fastened to the movable circuit board 422a, when the movable circuit board 422a moves on the X-Y plane relative to the base 421a or tilts relative to the Z-axis direction, the photosensitive chip 432a, the light filter holder 433a, and the light filter 434a may also move on the X-Y plane relative to the base 421a or tilt relative to the Z-axis direction. This implements stabilization.

Refer to FIG. 11 and FIG. 12 together. The photosensitive chip 432a is disposed on a side that is of the movable circuit board 422a and that is away from the second reflector 41a, so that in an assembling process of the photosensitive chip 432a and the stabilization motor 42a, the photosensitive chip 432a is not likely to interfere with the base 421a and the driving part 424a of the stabilization motor 42a. This reduces difficulty of assembling the photosensitive chip 432a.

In addition, because both the photosensitive surface 4321a and the first pin end 4322a of the photosensitive chip 432a face the same side, and the size of the first pin end 4322a is small, it is not easy for the first pin end 4322a of the photosensitive chip 432a to be directly fastened to the movable circuit board 422a and electrically connected to the movable circuit board 422a. However, in this implementation, one chip circuit board 431a is additionally disposed, and the size of the second pin end 4313a of the chip circuit board 431a is greater than the size of the first pin end 4322a of the photosensitive chip 432a, so that the first pin end 4322a of the photosensitive chip 432a is electrically connected to the movable circuit board 422a by using the second pin end 4313a of the chip circuit board 431a. Because it is easy for the second pin end 4313a of the chip circuit board 431a to be welded to the movable circuit board 422a, a location limit of the first pin end 4322a no longer prevents the photosensitive chip 432a from being fastened and electrically connected to the movable circuit board 422a.

In addition, the chip circuit board 431a, the photosensitive chip 432a, the light filter holder 433a, and the light filter 434a are disposed as one separate module, that is, the chip circuit board 431a, the photosensitive chip 432a, the light filter holder 433a, and the light filter 434a are of one independent integral structure. Therefore, in an assembling process of the stabilization assembly 4a, the chip circuit board 431a, the photosensitive chip 432a, the light filter holder 433a, and the light filter 434a may be first assembled into the chip module 43a, and then the chip module 43a is assembled on the stabilization motor 42a. Compared with a process of assembling the chip circuit board 431a, the photosensitive chip 432a, the light filter holder 433a, the light filter 434a, and the stabilization motor 42a into a whole, this assembling process is simple and has a low difficulty coefficient. In addition, in an assembling process of the stabilization motor 42a, the chip module 43a may be prevented from being scrapped together with an unqualified stabilization motor 42a. This significantly reduces defect loss costs. It may be understood that, because a structure of the stabilization motor 42a is complex, and a large quantity of manufacturing processes are required in an assembling process, the stabilization motor 42a is likely to be defective. If the chip module 43a and the stabilization motor 42a are assembled together, when the stabilization motor 42a is defective, the chip module 43a and the stabilization motor 42a are scrapped together. This significantly increases defect loss costs. However, in this implementation, because the chip module 43a and the stabilization motor 42a may be separately assembled, when the stabilization motor 42a is defective, the chip module 43a and the stabilization motor 42a are not scrapped together. This significantly reduces defect loss costs.

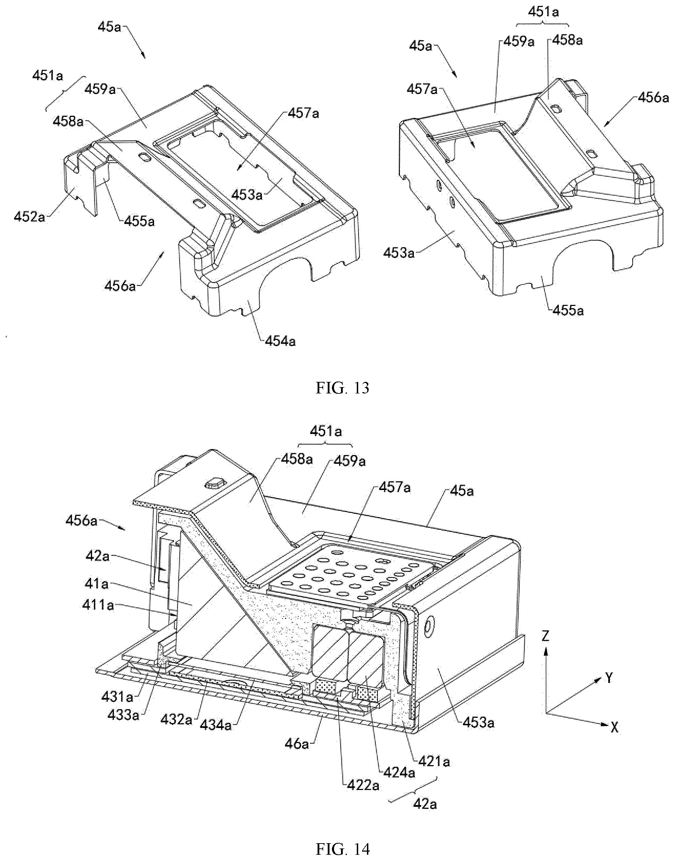

FIG. 13 is a schematic diagram of a structure of the first housing 45a shown in FIG. 6 from different angles. In an implementation, the first housing 45a includes a top wall 451a, a first wall 452a and a second wall 453a that are disposed opposite to each other, and a third wall 454a and a fourth wall 455a that are disposed opposite to each other. The third wall 454a and the fourth wall 455a are connected between the first wall 452a and the second wall 453a. The top wall 451a is connected between the first wall 452a and the second wall 453a, and is connected between the third wall 454a and the fourth wall 455a. An inner cavity of the first housing 45a is enclosed by the top wall 451a, the first wall 452a, the second wall 453a, the third wall 454a, and the fourth wall 455a. The top wall 451a of the first housing 45a includes a protruding portion 458a and a flat portion 459a. The protruding portion 458a is formed by a part that is of the top wall 451a and that is protruding away from the inner cavity of the first housing 45a.

In an implementation, the first housing 45a is provided with a notch 456a and an avoidance space 457a that are disposed at an interval. The notch 456a forms an opening on the first wall 452a and the top wall 451a. The avoidance space 457a forms an opening on the top wall 451a, and the avoidance space 457a communicates the inner cavity of the first housing 45a with an outside of the first housing 45a.

FIG. 14 is a schematic sectional view of a part of the stabilization assembly 4a shown in FIG. 3 at a line C-C. In an implementation, the base 421a of the stabilization motor 42a is fastened to the second housing 46a. The chip circuit board 431a and the second housing 46a are disposed at an interval. The chip circuit board 431a, the photosensitive chip 432a, the light filter holder 433a, and the light filter 434a are disposed in a suspended manner relative to the second housing 46a. In this way, when the chip circuit board 431a moves on the X-Y plane relative to the base 421a or tilts relative to the Z-axis direction, the chip circuit board 431a does not interfere with the second housing 46a.

Refer to FIG. 14 and FIG. 13. In an implementation, the first housing 45a is fastened to a top of the base 421a. The protruding part of the base 421a may be located in space enclosed by the protruding portion 458a of the top wall 451a of the first housing 45a. The first housing 45a may be disposed to cover the stabilization motor 42a. The first housing 45a and the second housing 46a may fit with each other to protect the stabilization motor 42a. The first housing 45a and the second housing 46a are separately disposed. This facilitates assembling of the stabilization motor 42a, the first housing 45a, and the second housing 46a. The second reflector 41a is exposed to the outside of the first housing 45a through the notch 456a of the first housing 45a.

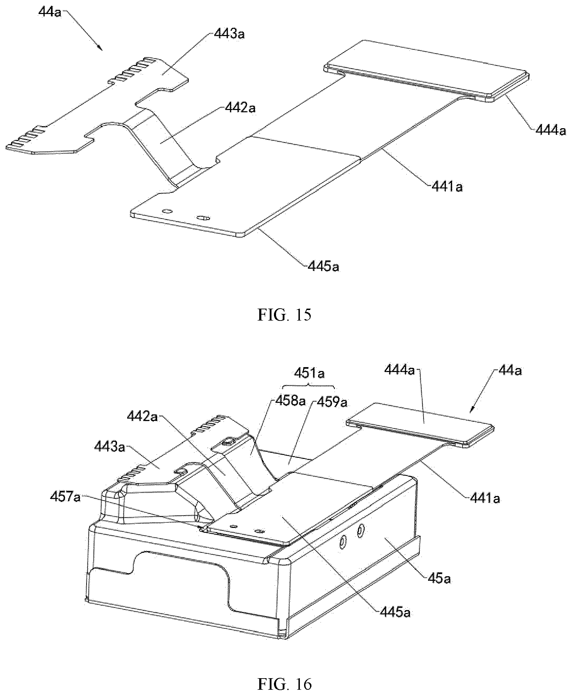

FIG. 15 is a schematic diagram of a structure of the assembly circuit board 44a shown in FIG. 6 from another angle. In an implementation, the assembly circuit board 44a includes a first part 441a, a second part 442a, and a third part 443a. The second part 442a is connected between the first part 441a and the third part 443a. The second part 442a is disposed in a tilted manner relative to both the first part 441a and the third part 443a. In this case, there is a height difference between the third part 443a and the first part 441a. For example, the second part 442a and the first part 441a are disposed at an obtuse angle. The third part 443a and the first part 441a are disposed at an obtuse angle.

The first part 441a includes a first end part 444a and a second end part 445a. A connector may be disposed on the first end 444a of the first part 441a. For example, the connector may be a female socket of a board to board connector (board to board, BTB). The connector may be electrically connected to an external component (for example, a male socket of the BTB of the host circuit board 400) of the camera module 100a. In addition, the second end part 445a of the first part 441a is connected to the second part 442a. It should be noted that a part of the first part 441a may be of a flexible section structure, so that the first part 441a is not limited to a straight structure shown in FIG. 15, and a position of the first end part 444a of the first part 441a may be flexibly set.

Refer to FIG. 16 and FIG. 15. FIG. 16 is a schematic diagram of a structure of the stabilization assembly 4a shown in FIG. 3 from a different angle. The assembly circuit board 44a is fastened to the first housing 45a. For example, the first part 441a of the assembly circuit board 44a is fastened to the flat portion 459a of the top wall 451a of the first housing 45a. The second end part 445a of the first part 441a of the assembly circuit board 44a covers the avoidance space 457a of the first housing 45a. The second part 442a and the third part 443a of the assembly circuit board 44a are fastened to the protruding portion 458a of the top wall 451a of the first housing 45a.

Refer to FIG. 16 and FIG. 14. In an implementation, the second end part 445a of the first part 441a of the assembly circuit board 44a may be electrically connected to the movable circuit board 422a of the stabilization motor 42a through the avoidance space 457a of the first housing 45a. Because the second end part 445a of the first part 441a of the assembly circuit board 44a is located at the top of the base 421a, and the movable circuit board 422a is located at the bottom of the base 421a, the second end part 445a of the first part 441a of the assembly circuit board 44a may be electrically connected to the movable circuit board 422a by using a flexible circuit board of the stabilization motor 42a. In addition, because the first end part 444a of the first part 441a of the assembly circuit board 44a is electrically connected to the external component of the camera module 100a, the movable circuit board 422a is electrically connected to the chip circuit board 431a, and the chip circuit board 431a is electrically connected to the photosensitive chip 432a, the photosensitive chip 432a may be electrically connected to the external assembly (for example, the host circuit board 400 shown in FIG. 2) of the camera module 100a by using the chip circuit board 431a, the movable circuit board 422a, the flexible circuit board, and the first part 441a of the assembly circuit board 44a. In this way, the photosensitive chip 432a and the external component of the camera module 100a may transmit a signal to each other.

In an implementation, the second end part 445a of the first part 441a of the assembly circuit board 44a may be electrically connected to the driving part 424a of the stabilization motor 42a by using the flexible circuit board and the movable circuit board 422a of the stabilization motor 42a. In this way, the driving part 424a of the stabilization motor 42a and the external assembly of the camera module 100a may transmit a signal to each other by using the first part 441a of the assembly circuit board 44a.

Specific structures of the reflection assembly 1a, the focusing lens 2a, the prime lens 3a, and the stabilization assembly 4a are specifically described above with reference to the related accompanying drawings. The following specifically describes position relationships and connection relationships between the reflection assembly 1a, the focusing lens 2a, the prime lens 3a, and the stabilization assembly 4a with reference to the related accompanying drawings.

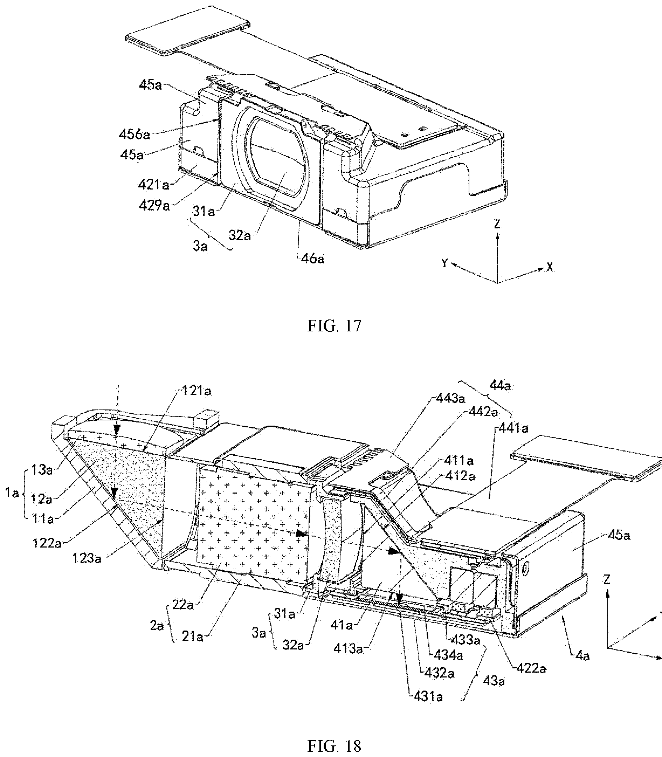

FIG. 17 is a schematic diagram of a structure of a part of the camera module 100a shown in FIG. 1. In an implementation, the second lens tube 31a of the prime lens 3a is fastened to the second housing 46a. For example, the second lens tube 31a of the prime lens 3a may be fastened to the second housing 46a by using an adhesive such as adhesive tape.

The second lens tube 31a of the prime lens 3a is further fastened to the base 421a, and is located in the second mounting space 425a of the base 421a (FIG. 8 shows the second mounting space 425a from different angles). For example, the second lens tube 31a of the prime lens 3a may be fastened to the base 421a by using an adhesive such as adhesive tape.

In an implementation, the prime lens 3a is further exposed to the outside of the first housing 45a through the notch 456a of the first housing 45a.

Refer to FIG. 18 and FIG. 17. FIG. 18 is a schematic sectional view of a part of the camera module 100a shown in FIG. 1. The second lens 32a of the prime lens 3a and the second light-entering surface 411a of the second reflector 41a are disposed opposite to each other. The second reflector 41a is located on an image side of the prime lens 3 a.

Refer to FIG. 18 again. The focusing lens 2a is located on a side that is of the prime lens 3a and that is away from the second reflector 41a, that is, the focusing lens 2a is located on an object side of the prime lens 3a. The lens 22a of the focusing lens 2a and the second lens 32a of the prime lens 3a are disposed opposite to each other.

The lens motor 21a of the focusing lens 2a is fastened to the second lens tube 31a of the prime lens 3a. For example, the lens motor 21a of the focusing lens 2a may be fastened to the second lens tube 31a of the prime lens 3a by using an adhesive such as adhesive tape.

In an implementation, the lens motor 21a of the focusing lens 2a is further electrically connected to the third part 443a of the assembly circuit board 44a. In this way, the focusing lens 2a may be electrically connected to the external assembly (for example, the host circuit board 400 shown in FIG. 2) of the camera module 100a by using the third part 443a, the second part 442a, and the first part 441a of the assembly circuit board 44a. In this way, the focusing lens 2a and the external assembly of the camera module 100a may transmit a signal to each other by using the assembly circuit board 44a.

Refer to FIG. 18 again. The reflection assembly 1a is located on a side that is of the focusing lens 2a and that is away from the prime lens 3a, that is, the reflection assembly 1a is located on an object side of the focusing lens 2a. The first light-exiting surface 123a of the first reflector 12a of the reflection assembly 1a and the lens 22a of the focusing lens 2a are disposed opposite to each other.

In an implementation, the reflector holder 11a of the reflection assembly 1a is fastened to the lens motor 21a of the focusing lens 2a. For example, the reflector holder 11a of the reflection assembly 1a may be fastened to the lens motor 21a of the focusing lens 2a by using an adhesive such as adhesive tape.

Refer to FIG. 18 again and FIG. 2. In this implementation, the light that enters the electronic device 1000 may enter the planoconvex lens 13a through the convex surface of the planoconvex lens 13a. The light shrinks by using the planoconvex lens 13a and then exits through the flat surface of the planoconvex lens 13a. In this case, the light then enters the first reflector 12a through the first light-entering surface 121a of the first reflector 12a. Then, the light is reflected by the first reflective surface 122a of the first reflector 12a, and the light that propagates in the negative direction of the Z-axis is reflected and propagates in the positive direction of the X-axis. The light then exits through the first light-exiting surface 123a of the first reflector 12a, and enters the lens 22a of the focusing lens 2a. The light is transmitted to the second light-entering surface 411a of the second reflector 41a through the lens 22a of the focusing lens 2a and the second lens 32a of the prime lens 3a, and enters the second reflector 41a through the second light-entering surface 411a of the second reflector 41a. The light is reflected by the second reflective surface 412a of the second reflector 41a, and the light that propagates in the positive direction of the X-axis is reflected and propagates in the negative direction of the Z-axis. The light then exits through the second light-exiting surface 413a of the second reflector 41a, and is transmitted to the photosensitive chip 432a through the light filter 434a. An example of a path of the light is shown by using dashed lines with arrows in FIG. 18.

It may be understood that, the camera module 100a includes the first reflector 12a and the second reflector 41a, so that the photosensitive surface of the photosensitive chip 432a may be parallel to the planoconvex lens 13a, and a size of the photosensitive surface is not limited by a size of the electronic device 1000 in the thickness direction. This facilitates implementation of a design of a large photosensitive surface of the camera module 100a.

With reference to FIG. 2, when the camera module 100a is fastened in the housing 200, first bottom space S1 of the reflector holder 11a may be used for arranging another component of the electronic device 1000. Second space S2 enclosed by the flat portion 459a and a part of the protruding portion 458a of the top wall 451a of the first housing 45a and the rear cover 202 may alternatively be used for arranging the another component of the electronic device 1000. In this way, space utilization of the electronic device 1000 is high. Certainly, in another implementation, a part of the rear cover 202 may be recessed inward, and fits with the top wall 451a of the first housing 45a. In this case, the second space S2 may be saved, and a thickness of the electronic device 1000 may be reduced. This facilitates a thin arrangement of the electronic device 1000.

It may be understood that, in a process of assembling the reflection assembly 1a, the focusing lens 2a, the prime lens 3a, and the stabilization assembly 4a, it needs to be ensured that the reflection assembly 1a, the focusing lens 2a, the prime lens 3a, and the stabilization assembly 4a meet a specific optical parameter, to ensure that the camera module 100a has high photography quality. In this implementation, because the chip module 43a (FIG. 11 shows the chip module 43a from a different angle) is separately assembled, locations of the reflection assembly 1a, the focusing lens 2a, the prime lens 3a, the second reflector 41a, and the photosensitive chip 432a of the chip module 43a may be flexibly adjusted, and difficulty of adjusting an optical system of the camera module 100a is low.

In this embodiment, the focusing lens 2a and the prime lens 3a cooperate with each other, so that when the lens motor 21a of the focusing lens 2a drives the lens 22a to move toward the object side, a combined focal length of the focusing lens 2a and the prime lens 3a may present a decreasing trend. In this way, the lens 22a of the focusing lens 2a only needs to move for a small displacement (that is, a small focusing stroke) to implement a focusing process of the camera module 100a. In addition, when image obtaining quality is reduced because the focusing lens 2a needs to move for a long distance when photographing a near scene, the prime lens 3a may compensate for an optical system. This function can effectively reduce aberration caused by focusing, so that the camera module 100a has a higher focusing capability, and may not only perform long-range photography, but also photograph a near scene (for example, a macro scene), and has higher image obtaining quality and high definition of an obtained image.

In this embodiment, the first reflector 12a is disposed on the object side of the focusing lens 2a, to change a propagation direction of the light, so that a propagation direction of the light in the focusing lens 2a and the prime lens 3a may be different from a direction in which the light enters the electronic device 1000, so that a placement position, angle, space, or the like of the camera module 100a are more flexible. The camera module 100a is a periscope camera module.

In addition, the light starts to shrink when passing through the planoconvex lens 13a. When the light reaches the focusing lens 2a after being reflected by the first reflector 12a, the light has shrunk over a long optical path, and a diameter of the light is small. The focusing lens 2a and the prime lens 3a are no longer maximum limits on a light transmission aperture of the camera module 100a. Therefore, under a specific device thickness, even if sizes of the focusing lens 2a and the prime lens 3a are limited by the device thickness, the planoconvex lens 13a and the first reflector 12a are disposed, so that a light transmission aperture of the camera module 100a can be effectively increased, and a wide aperture can be implemented, that is, the camera module 100a has a small aperture value. In addition, the planoconvex lens 13a is disposed on the object side of the first reflector 12a, so that a path length of the optical system can be increased. This implements telephoto photography effect. In this embodiment, an aperture value of the camera module 100a may be less than 2.2, and an amplification rate may be greater than 2.5X.

The foregoing specifically describes structures of the reflection assembly 1a, the focusing lens 2a, the prime lens 3a, and the stabilization assembly 4a, and the position relationships and the connection relationships between the reflection assembly 1a, the focusing lens 2a, the prime lens 3a, and the stabilization assembly 4a with reference to the related accompanying drawings. The following describes in detail some implementations of a heat dissipation manner and a sealing manner of the camera module 100a with reference to related accompanying drawings.

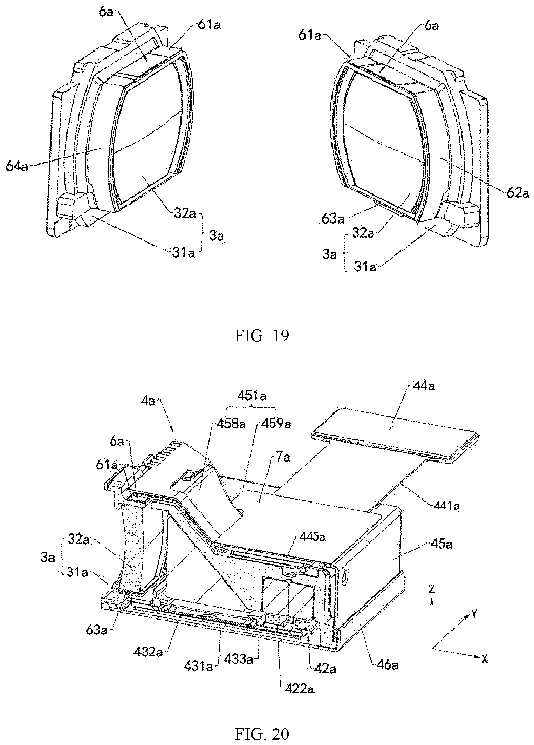

FIG. 19 is a schematic diagram of assembling a first thermal conductive part 6a and a prime lens 3a from different angles according to an embodiment of this application. The camera module 100a further includes the first thermal conductive part 6a. A material of the first thermal conductive part 6a may be graphene, a graphite sheet, copper foil, conductive fabric, or thermal gel. The first thermal conductive part 6a wraps the second lens tube 31a of the prime lens 3 a.

For example, the first thermal conductive part 6a may be of a ring structure. The first thermal conductive part 6a includes a first segment 61a, a second segment 62a, a third segment 63a, and a fourth segment 64a that are sequentially connected. The first segment 61a, the second segment 62a, the third segment 63a, and the fourth segment 64a surround a circumferential side surface of the second lens tube 31a, and wrap a part of the circumferential side surface. In this case, the first thermal conductive part 6a may be disposed around the second lens 32a. In other embodiments, the first thermal conductive part 6a may alternatively be in another shape. The first thermal conductive part 6a may wrap an entire outer surface of the second lens tube 31a.

Refer to FIG. 20 and FIG. 19. FIG. 20 is a schematic sectional view of a part of a first thermal conductive part 6a, a prime lens 3a, and a stabilization assembly 4a according to an embodiment of this application. The third segment 63a of the first thermal conductive part 6a is disposed close to the photosensitive chip 432a. It may be understood that, when the photosensitive chip 432a is in a working state, the photosensitive chip 432a generates heat and radiates the heat to a periphery of the second lens tube 31a of the prime lens 3a. In this case, the first thermal conductive part 6a may absorb a part of the heat, and conduct a part of heat to an outside of the stabilization assembly 4a by using the first segment 61a, the second segment 62a, the third segment 63a, and the fourth segment 64a of the first thermal conductive part 6a, to avoid uneven temperature of the second lens 32a caused by absorption of a part of heat by the second lens 32a of the prime lens 3a. This prevents the light from deflecting in a propagation process of the second lens 32a and the image obtaining quality of the camera module 100a from decreasing.

In another embodiment, the camera module 100a may further include a second thermal conductive part (not shown in the figure). The second thermal conductive part is fastened to the chip circuit board 431a. The second thermal conductive part may absorb the heat generated by the photosensitive chip 432a. For example, the heat absorbed by the second thermal conductive part may be conducted to the outside of the stabilization assembly 4a by using a thermal conductive material (for example, a thermal conductive material on a connecting part 423a of the stabilization motor 42a in FIG. 7) in the stabilization motor 42a.

In other embodiments, the second thermal conductive part may alternatively be fastened to the light filter holder 433a, the movable circuit board 422a, the first housing 45a, or the second housing 46a. This is not specifically limited in this application.

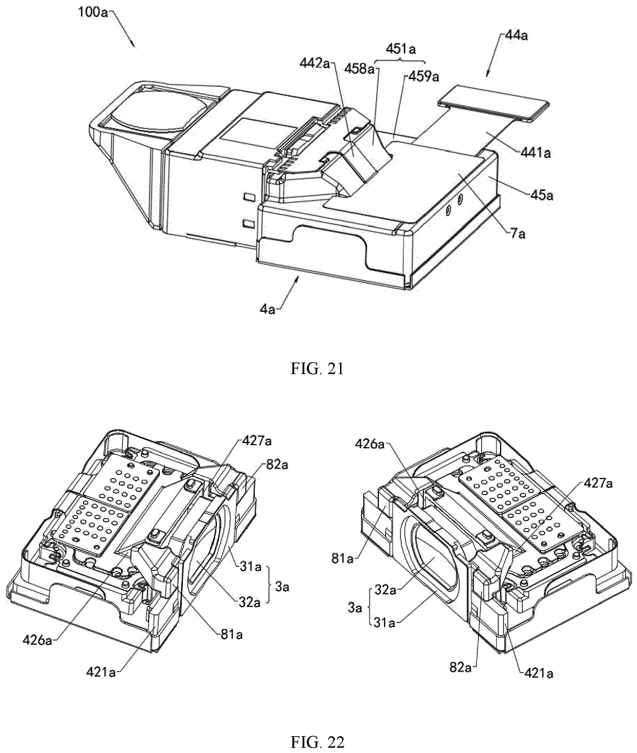

Refer to FIG. 21 and FIG. 20. FIG. 21 is a schematic diagram of a structure of another implementation of a camera module 100a according to an embodiment of this application. The camera module 100a further includes a first sealing part 7a. A material of the first sealing part 7a may be mylar (Mylar is a kind of tough polyester polymer). The first sealing part 7a is fastened to the flat portion 459a of the top wall 451a of the first housing 45a, and covers a gap between the second end part 445a of the first part 441a of the assembly circuit board 44a and the avoidance space 457a. In this way, dust or impurities outside the camera module 100a do not enter the stabilization assembly 4a through the avoidance space 457a.

FIG. 22 is a schematic diagram of fitting between a first sealing block 81a, a second sealing block 82a, a prime lens 3a, and a part of stabilization assembly 4a from different angles according to an embodiment of this application. The camera module 100a further includes a first sealing block 81a and a second sealing block 82a. Materials of the first sealing block 81a and the second sealing block 82a may be foam, plastic, metal, or the like.

The first sealing block 81a is fastened between the second lens tube 31a of the prime lens 3a and the base 421a. The way in which the first sealing block 81a is fastened to the base 421a includes fastening the first sealing block 81a to the first side wall 426a of the protruding part of the base 421a. In addition, the second sealing block 82a is fastened between the second lens tube 31a of the prime lens 3a and the base 421a. The way in which the second sealing block 82a is fastened to the base 421a includes fastening the second sealing block 82a to the second side wall 427a of the protruding part of the base 421a. In this case, the first sealing block 81a and the second sealing block 82a are respectively located on two sides of the protruding part of the base 421a. The first sealing block 81a and the second sealing block 82a may jointly seal a gap between the second lens tube 31a of the prime lens 3a and the base 421a, to prevent dust or impurities outside the camera module 100a from entering the stabilization assembly 4a through the gap between the prime lens 3a and the base 421a.

In addition, the second lens tube 31a of the prime lens 3a is fastened to the first sealing block 81a, the second sealing block 82a, and the base 421a. In this way, a connection area of the second lens tube 31a of the prime lens 3a is large, and a connection between the second lens tube 31a of the prime lens 3a and the base 421a is stabler and firmer.

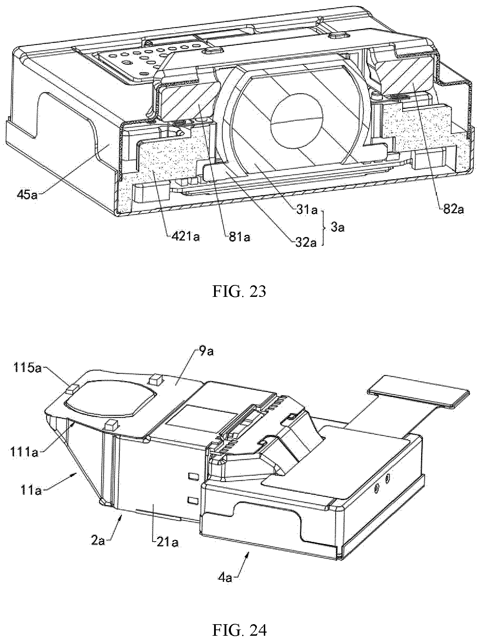

FIG. 23 is a schematic sectional view of a first housing 45a, a first sealing block 81a, a second sealing block 82a, a prime lens 3a, and a part of stabilization assembly 4a according to an embodiment of this application. The first sealing block 81a is further fastened to the first housing 45a. In this case, the first sealing block 81a is fastened between the second lens tube 31a of the prime lens 3a and the first housing 45a. The second sealing block 82a is further fastened to the first housing 45a. In this case, the second sealing block 82a is fastened between the second lens tube 31a of the prime lens 3a and the first housing 45a. In this way, the first sealing block 81a and the second sealing block 82a may further jointly seal the gap between the second lens tube 31a of the prime lens 3a and the first housing 45a, to prevent dust or impurities outside the camera module 100a from entering the stabilization assembly 4a through the gap between the prime lens 3a and the first housing 45a.

In another embodiment, the first sealing block 81a and the second sealing block 82a and the base 421a may alternatively be an integral mechanical part. For example, the first sealing block 81a and the second sealing block 82a are injection molded to the base 421a by using an injection molding process.

FIG. 24 is a schematic diagram of a structure of still another implementation of a camera module 100a according to an embodiment of this application. The camera module 100a further includes a second sealing part 9a. A material of the second sealing part 9a may be mylar (Mylar is a kind of tough polyester polymer).

The second sealing part 9a may be fastened between the first surface 111a of the reflector holder 11a and the rear cover 202 (refer to FIG. 2). In this way, dust or impurities outside the electronic device 1000 (refer to FIG. 2) do not enter the electronic device 1000 through a gap between the camera module 100a and the rear cover 202. In addition, the second sealing part 9a may be made of a selected material, so that an internal assembly that is of the electronic device 1000 and that can be seen through the gap between the camera module 100a and the rear cover 202 is completely blocked. This ensures a beautiful appearance.

In an implementation, the second sealing part 9a is further fastened to the lens motor 21a of the focusing lens 2a, and covers a joint between the reflection assembly 1a and the focusing lens 2a.

In another implementation, a second sealing part 9a may alternatively be disposed at a bottom of the focusing lens 2a. The second sealing part 9a may cover a joint between the focusing lens 2a and the stabilization assembly 4a. In this way, dust or impurities outside the camera module 100a do not enter the stabilization assembly 4a through the joint between the focusing lens 2a and the stabilization assembly 4a.

It may be understood that the foregoing specifically describes a structure of the camera module 100a with reference to related accompanying drawings. In another embodiment, any variation or replacement based on the structure of the camera module 100a in this application also falls within the protection scope of this application. For example, the stabilization motor 42a is disposed in an inverted manner, so that the movable circuit board 422a is located at a top of the stabilization motor 42a. Then, the chip module 43a is fastened to the movable circuit board 422a. In addition, the second reflector 41a is disposed on an outer side of the stabilization motor 42a. The chip module 43a is located between the second reflector 41a and the stabilization motor 42a. Because the second reflector 41a is disposed on the outer side of the stabilization motor 42a, the second reflector 41a and the stabilization motor 42a may be separately assembled. This reduces assembling difficulty and simplifies the structure of the stabilization motor 42a.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module (100a), comprising a planoconvex lens (13a), a first reflector (12a), a focusing lens (2a), a prime lens (3a), a second reflector (41a), and a chip module (43a) that are sequentially arranged from an object side to an image side, wherein the first reflector (12a) is configured to direct an optical axis from a first direction to a second direction, the second reflector (41a) is configured to direct the optical axis from the second direction to a third direction, and both the third direction and the first direction intersect the second direction;
the camera module (100a) further comprises a stabilization motor (42a), the stabilization motor (42a) comprises a base (421a), a movable circuit board (422a), and a driving mechanism (424a), the movable circuit board (422a) is movably connected to the base (421a), and the chip module (43a) is fastened to the movable circuit board (422a); and
the driving mechanism (424a) comprises a magnet (4241a) and a coil (4242a), one of the magnet (4241a) and the coil (4242a) is fastened to the base (421a) and the other of the magnet (4241a) and the coil (4242a) is fastened to the movable circuit board (422a), and the coil (4242a) is configured to: when being energized, cooperate with the magnet (4241a) to drive the movable circuit board (422a) to move on a plane that is perpendicular to the third direction or tilts relative to the third direction.

2. The camera module (100a) according to claim 1, wherein movable space (429a) is enclosed by a bottom of the base (421a), second mounting space (425a) is further enclosed by the base (421a), and the second mounting space (425a) communicates with the movable space (429a);
the movable circuit board (422a) is located in the movable space (429a), and the movable circuit board (422a) is provided with a through hole (420a); and
the second reflector (41a) is fastened in the second mounting space (425a), the chip module (43a) is fastened to a surface that is of the movable circuit board (422a) and that is away from the second reflector (41a), and the through hole (420a) is located between the chip module (43a) and a second light-exiting surface (413a) of the second reflector (41a).

3. The camera module (100a) according to claim 2, wherein the chip module (43a) comprises a photosensitive chip (432a) and a chip circuit board (431a), the photosensitive chip (432a) comprises a photosensitive surface (4321a) and a first pin end (4322a), the photosensitive surface (4321a) and the first pin end (4322a) face a same side, the chip circuit board (431a) comprises a second pin end (4313a), and a size of the second pin end (4313a) is greater than a size of the first pin end (4322a); and
the photosensitive chip (432a) is fastened to the chip circuit board (431a), the chip circuit board (431a) is fastened to the movable circuit board (422a), the first pin end (4322a) is electrically connected to the movable circuit board (422a) by using the second pin end (4313a), and the through hole (420a) is located between the photosensitive surface (4321a) of the photosensitive chip (432a) and the second light-exiting surface (413a) of the second reflector (41a).

4. The camera module (100a) according to claim 3, wherein the photosensitive chip (432a) is fastened to a middle part of the chip circuit board (431a), and the second pin end (4313a) is located at a peripheral edge of the chip circuit board (431a).

5. The camera module (100a) according to claim 3 or 4, wherein the chip module (43a) further comprises a light filter holder (433a) and a light filter (434a);
the light filter holder (433a) is fastened to the chip circuit board (431a), the light filter holder (433a) and the photosensitive chip (432a) are located on a same side of the chip circuit board (431a), and the light filter holder (433a) is provided with a light transmission hole (53a); and
the light filter (434a) is fastened to the light filter holder (433a), and the light filter (434a) is located in the light transmission hole (53a) and is located between the photosensitive chip (432a) and the second reflector (41a).

6. The camera module (100a) according to claim 3 or 4, wherein the chip circuit board (431a) is provided with a sunken recess (437a), and the photosensitive chip (432a) is located in the sunken recess (437a).

7. The camera module (100a) according to any one of claims 2 to 6, wherein the prime lens (3a) is fastened in the second mounting space (425a).

8. The camera module (100a) according to any one of claims 1 to 7, wherein the third direction is parallel to the first direction, and both the third direction and the first direction are perpendicular to the second direction.

9. The camera module (100a) according to any one of claims 1 to 8, wherein the planoconvex lens (13a) is fastened to the first reflector (12a), or the planoconvex lens (13a) and the first reflector (12a) are of an integral structure.

10. The camera module (100a) according to claim 9, wherein the camera module (100a) further comprises a reflector holder (11a), the reflector holder (11a) comprises a first surface (111a), a second surface (112a), and a third surface (113a), the third surface (113a) is connected between the first surface (111a) and the second surface (112a), and the second surface (112a) is fastened to the focusing lens (2a); and
the reflector holder (11a) comprises first mounting space (114a), openings of the first mounting space (114a) are located on the first surface (111a) and the second surface (112a), the first reflector (12a) is fastened in the first mounting space (114a), a first light-entering surface (121a) of the first reflector (12a) and the first surface (111a) of the reflector holder (11a) face a same side, and a first light-exiting surface (123a) of the first reflector (12a) and the second surface (112a) of the reflector holder (11a) face a same side.

11. The camera module (100a) according to claim 10, wherein the reflector holder (11a) comprises a convex hull (115a), the convex hull (115a) is disposed to protrude from the first surface (111a), and the convex hull (115a) is located around the first mounting space (114a) and is disposed around the first mounting space (114a); and
a distance between a convex surface of the planoconvex lens (13a) and the first surface (111a) is less than a distance between a top surface of the convex hull (115a) and the first surface (111a).

12. The camera module (100a) according to any one of claims 3 to 11, wherein the camera module (100a) further comprises an assembly circuit board (44a) and the assembly circuit board (44a) is fastened to the base (421a); and
the first pin end (4322a) is electrically connected to the assembly circuit board (44a) by using the second pin end (4313a), the movable circuit board (422a), and the driving mechanism (424a).

13. The camera module (100a) according to any one of claims 2 to 11, wherein the second mounting space (425a) comprises space enclosed by a protruding part of a top of the base (421a); and
the camera module (100a) further comprises a first housing (45a), the first housing (45a) is fastened to the base (421a), the first housing (45a) is disposed to cover the stabilization motor (42a), a top wall (451a) of the first housing (45a) comprises a protruding portion (458a) and a flat portion (459a), and the protruding part of the top of the base (421a) is located in space enclosed by the protruding portion (458a) of the top wall (451a) of the first housing (45a).

14. The camera module (100a) according to claim 13, wherein the flat portion (459a) of the first housing (45a) is provided with avoidance space (457a), and the avoidance space (457a) communicates internal space of the first housing (45a) with an outside of an inside of the first housing (45a);
the camera module (100a) further comprises an assembly circuit board (44a), the assembly circuit board (44a) comprises a first part (441a), a second part (442a), and a third part (443a), the first part (441a) comprises a first end part (444a) and a second end part (445a), the second part (442a) is connected between the third part (443a) and the second end part (445a) of the first part (441a), and there is a height difference between the third part (443a) and the first part (441a); and
the first part (441a) is fastened to the flat portion (459a) of the top wall (451a) of the first housing (45a), the second end part (445a) of the first part (441a) is electrically connected to the driving mechanism (424a) through the avoidance space (457a) of the first housing (45a), the second part (442a) and the third part (443a) are fastened to the protruding portion (458a) of the top wall (451a) of the first housing (45a), and the third part (443a) is electrically connected to a lens motor (21a) of the focusing lens (2a).

15. The camera module (100a) according to claim 14, wherein the camera module (100a) further comprises a first sealing part (7a) and the first sealing part (7a) is fastened to the flat portion (459a) of the top wall (451a) of the first housing (45a) and covers a gap between the second end part (445a) of the first part (441a) of the assembly circuit board (44a) and the avoidance space (457a).

16. The camera module (100a) according to any one of claims 13 to 15, wherein the camera module (100a) further comprises a first sealing block (81a) and a second sealing block (82a); and
the first sealing block (81a) is fastened to a second lens tube (31a) of the prime lens (3a), the base (421a), and the first housing (45a), the second sealing block (82a) is fastened to the second lens tube (31a) of the prime lens (3a) and the base (421a), and the first sealing block (81a) and the second sealing block (82a) are respectively located on two sides of the protruding part of the base (421a) respectively.

17. The camera module (100a) according to any one of claims 7 to 16, wherein the prime lens (3a) comprises the second lens tube (31a) and a second lens (32a), the second lens (32a) is fastened to the second lens tube (31a), and the second lens tube (31a) is fastened in the second mounting space (425a); and
the camera module (100a) further comprises the first thermal conductive part (6a), and the first thermal conductive part (6a) wraps a circumferential side surface of the second lens tube (31a) and surrounds the second lens (32a).

18. An electronic device (1000), comprising a housing (200) and the camera module (100a) according to any one of claims 1 to 17, wherein the camera module (100a) is disposed in the housing (200).
